# DEMANDE DE BREVET EUROPEEN

(11) **EP 2 003 804 A1**
(43) Date de publication de la demande: **17.12.2008**
(21) Numéro de dépôt: 08290525.8
(22) Date de dépôt: 09.06.2008
(51) Int. Cl.: H04H 60/80, H04N 5/445

(54) **Procédé et dispositif de partage de services personnalisés, notamment pour télévision interactive**

(30) Priorité: 15.06.2007 FR 0704254
(71) Demandeur: Alcatel Lucent, 75008 Paris (FR)
(72) Inventeur: Baynaud, Erwan, 75008 Paris (FR); Delegue, Gérard, 75008 Paris (FR); Marilly, Emmanuel, 75008 Paris (FR)
(74) Mandataire: Demulsant, Xavier

(57) **Abrégé**

Procédé de partage d'au moins un service, notamment service de télévision interactive, entre dispositif source et terminal de communication cible, ce procédé comprenant les étapes suivantes : réception de données génériques du guide des services électroniques, ces données génériques provenant d'un réseau de diffusion numérique ; réception de données spécifiques au profil de l'utilisateur, ces données spécifiques provenant d'une connexion réseau point à point ; encodage des données génériques et spécifiques et mise à jour du guide des services électroniques du dispositif source ; sélection d'un terminal de communication cible ; sélection d'au moins un service à transmettre à ce terminal; identification des fragments ou des morceaux de fragments du guide des services électroniques du dispositif source correspondant au service à transmettre au terminal de communication cible ; transmission des fragments ou des morceaux de fragments du guide des services électroniques du dispositif source vers le terminal cible, ces fragments étant au moins en partie personnalisés ; mise à jour du guide des services électroniques du terminal cible.

## Description

L'invention se rapporte au domaine technique général de la diffusion et la réception des applications multimédia et plus particulièrement un procédé de navigation et de sélection de services ou de programmes audiovisuels.

Par « multimédia », on désigne l'utilisation interactive et simultanée de plusieurs modes de représentation de l'information (textes, images fixes ou animées, sons).

Internet, téléphonie fixe et mobile, radio et télévision sont aujourd'hui proposés aux ordinateurs par un seul modem « multi-fonctions ». La convergence de l'audiovisuel, de l'informatique et des télécommunications est une réalité pour les détenteurs de ces modems.

Le multimédia interactif sur terminaux mobiles suscite également un grand intérêt : MPEG4-BIFS, MPEG-LASeR (Lightweight Application Scene Representation, mis en avant par Streamezzo), SVG (Scalable Vector Graphics, mis en avant par le W3C World Wide Web Consortium), MORE (Mobile Open Rich-Media Environment, mis en avant par la société Nokia).

La multiplication des chaînes et services a pour effet de placer l'utilisateur devant un choix de plus en plus complexe.

Des moyens sont mis en place afin de permettre à l'utilisateur de « naviguer » et d'effectuer son choix parmi les programmes et les services qui lui sont proposés.

Ces moyens sont conventionnellement dénommés guide des programmes électroniques (EPG Electronic Program Guide) et guide des services électroniques (ESG Electronic Service Guide).

Ces guides sont des applications logicielles qui peuvent être utilisées dans un environnement aussi bien numérique qu'analogique.

L'EPG est en soi un service que doit offrir une télévision interactive, parmi d'autres services : VoD (Video on Demand), podcast, PVR (Personal Video Recording), vote, quiz, achat. Par « télévision interactive » (ITV Interactive Television) on désigne ici toute technologie permettant une communication à double sens entre spectateurs et fournisseur de services (tel que broadcaster, câblodistributeur), notamment pour le divertissement, l'information, l'éducation, le commerce.

Les consommateurs de services de télécommunications sont faces à une multitude d'offres de services composites : offre combinée voix-Internet-Télévision sur accès haut débit (triple play), site portail de services 3G (3G portal services), télévision sur terminal mobile.

Il en résulte une complexité croissante dans l'emploi des services, encore plus accentuée par la diversité des terminaux existants et des réseaux pouvant supporter ces services.

Par exemple, une vidéo peut être lue en transit (streamed) depuis un serveur Internet vers un terminal PC, ou bien diffusée par câble vers un écran de télévision, ou bien multi diffusée dans un réseau 3G de terminaux de communication mobile.

Il en résulte que le profilage est devenu une caractéristique critique pour les fournisseurs de services et les opérateurs, une meilleure compréhension du comportement des consommateurs devant permettre d'augmenter la valeur des infrastructures de service (portail 3G par exemple), en fournissant des services plus ciblés et personnalisés.

Cette personnalisation est effectuée par construction du profil de l'utilisateur de services. Cette construction peut être explicite, implicite ou supervisée. Dans une construction explicite, les informations sont fournies directement par l'utilisateur. Ces informations peuvent être saisies par l'utilisateur ou bien encore obtenues automatiquement par le système. La construction implicite du profil de l'utilisateur repose sur un procédé d'inférence du contexte et préférences de l'utilisateur via son comportement lors de l'utilisation des services. Cette construction implicite met conventionnellement en oeuvre les classements Bayésiens, les réseaux de neurones, ou les algorithmes génétiques. La construction supervisée demande au consommateur son degré de satisfaction pour chaque réponse générée par le fournisseur de services.

Pour les plateformes de services de télécommunications, la société Siemens propose un produit dénommé Service Delivery Manager tSM (tango SM) pour les services à large bande. Nokia Technlogy Platform a développé un logiciel pour les smartphones Nokia Série 60, permettant de collationner les données d'usage (40 à 80 kB/mois/utilisateur). A partir d'un panel d'utilisateurs volontaires, une fouille de données (data mining) a permis de dégager des profils d'utilisateurs et d'utilisations (voir Hannu Verkasalo, Handset-Based Monitoring of Mobile Customer Behavior).

Les plateformes offrant des services à destination des terminaux mobiles tiennent compte de la taille modeste des écrans de ces appareils, la personnalisation de l'affichage des informations et la personnalisation de l'information elle-même permettant de limiter l'effort et le temps passés à la recherche de cette information.

Il a ainsi été proposé, pour la mise en oeuvre du profilage, de tenir compte des caractéristiques du terminal de communication de l'utilisateur.

Ainsi, par exemple, le document FR2792484 de la demanderesse, décrit un réseau de communications personnalisé. Un serveur contient des informations sur les utilisateurs (personnalités, habitudes) et leurs terminaux (caractéristiques de l'interface graphique, de l'interface audio, fréquence de travail du processeur). Les données d'utilisateurs sont pré chargées ou fournies en ligne. Une interface utilisateur est construite en fonction de la requête de l'utilisateur, cette interface ne contenant que des objets ou applications adaptées au terminal de l'utilisateur.

La prise en compte des caractéristiques du terminal de l'utilisateur pour la construction de son profil est avantageuse en termes de confort d'utilisation, par exemple pour la télévision sur terminal mobile.

Mais cette prise en compte des caractéristiques du terminal entraîne les difficultés suivantes.

Premièrement, le profil de l'utilisateur, tel qu'enregistré dans son terminal mobile ne sera généralement pas le même que celui enregistré pour son téléviseur. Cette différence de profil peut interdire à l'utilisateur d'accéder aux mêmes services interactifs, indépendamment du terminal utilisé.

Deuxièmement, cette différence de profil peut diminuer l'interactivité au sein d'une communauté virtuelle. Un utilisateur accepte difficilement de ne pas pouvoir disposer de la même interactivité que ses amis, par suite d'une différence de profil. Par exemple, la demanderesse a développé une technologie de télévision interactive appelée AmigoTV permettant à l'utilisateur de partager au sein d'une communauté des opinions et des émotions. Lorsque plusieurs amis regardent le même programme de télévision, ils peuvent, grâce à AmigoTV, le commenter en direct entre eux, leurs voix passant par Internet, six personnes pouvant communiquer en même temps. AmigoTV permet également d'envoyer des images et des sons choisis au sein d'un catalogue, pour illustrer son humeur en réaction à un évènement télévisé.

La présente invention vise donc à fournir des moyens permettant à l'utilisateur de bénéficier sur un second terminal, notamment un terminal mobile, d'un nombre optimum de services accessibles à cet utilisateur via un premier terminal.

A ces fins, l'invention se rapporte, selon un premier aspect, à un procédé de partage d'au moins un service, notamment un service de télévision interactive, entre un dispositif source et un terminal de communication cible munis chacun d'un guide des services électroniques (ESG), ce procédé comprenant les étapes suivantes :
- réception, au dispositif source :
   ■ de données génériques de l'ESG en provenance d'un réseau de diffusion numérique;
   ■ de données spécifiques au profil de l'utilisateur du dispositif source en provenance d'une connexion réseau point à point;
- mise à jour de l'ESG du dispositif source à partir des données génériques et spécifiques ;
- sélection d'un terminal de communication cible muni d'un ESG;
- sélection d'au moins un service à transmettre à ce terminal de communication cible;
- identification de fragments ou de morceaux de fragments de l'ESG du dispositif source, correspondant au service à transmettre au terminal de communication cible;
- transmission des fragments de l'ESG du dispositif source vers le terminal de communication cible, ces fragments ou morceaux de fragments étant au moins en partie personnalisés car issus des données spécifiques au profil de l'utilisateur du dispositif source;
- mise à jour de l'ESG du terminal de communication cible.

Avantageusement, le procédé comprend une étape de sélection de services dont la transmission au terminal cible est souhaitée et une étape de filtrage, parmi lesdits services, de ceux ne pouvant être transmis compte tenu de droits d'accès.

L'invention se rapporte, selon un deuxième aspect, à un terminal source pourvu d'un guide des services électroniques (ESG) et d'un dispositif de partage d'au moins un service, notamment un service personnalisé de télévision interactive, vers un terminal de communication cible, ce dispositif de partage comprenant :
- des moyens de réception de données génériques de l'ESG en provenance d'un réseau de diffusion numérique;
- des moyens de réception de données spécifiques au profil de l'utilisateur en provenance d'une connexion réseau point à point;
- des moyens de mise à jour de l'ESG du dispositif source;
- des moyens de sélection d'un terminal de communication cible;
- des moyens de sélection d'au moins un service à transmettre à ce terminal de communication cible;
- des moyens d'identification de fragments ou de morceaux de fragments de l'ESG du dispositif source, correspondant au service à transmettre au terminal de communication cible;
- des moyens de transmission des fragments de l'ESG du dispositif source vers le terminal de communication cible, ces fragments étant au moins en partie personnalisés car issus des données spécifiques au profil de l'utilisateur du dispositif source.

Avantageusement, ce terminal est un terminal de communication mobile.

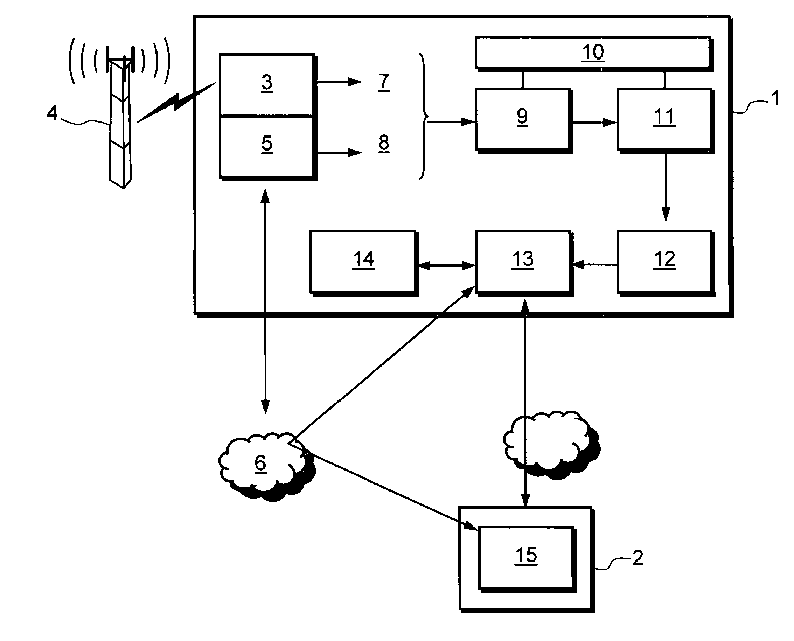

D'autres objets et avantages de l'invention apparaîtront au cours de la description suivante de modes de réalisations, description qui va être effectuée en se référant à la figure unique annexée.

Le dispositif source 1 est avantageusement un terminal de communication mobile.

Le terminal cible 2 peut être un téléphone mobile, un récepteur de télévision pourvu d'un décodeur, un récepteur de télévision pourvu d'une connexion wifi ou bluetooth, ou bien encore un ordinateur personnel.

Le dispositif source est pourvu d'un ensemble de moyens qui vont maintenant être présentés.

En premier lieu, le dispositif source 1 comprend des moyens de réception 3 des données génériques du guide des services électroniques ESG, ces données génériques provenant d'un réseau de diffusion numérique 4 tel que DVB-H, DVB-H+, DMB-S.

Le dispositif source 1 comprend par ailleurs des moyens de réception 5 des données spécifiques de l'ESG, ces données spécifiques dépendant du profil de l'utilisateur du dispositif source 1, ces données provenant d'un réseau point à point 6.

La réception des données génériques et spécifiques de l'ESG comprend trois phases : l'identification des ESG disponibles, l'acquisition des fragments d'ESG et la mise à jour. Une syntaxe des données d'ESG est présentée dans le document EP 1791280 pour le standard européen de télévision numérique DVB.

A partir des données génériques 7 et des données personnalisées 8 reçues, un guide des services électroniques à jour est obtenu. La mise à jour peut être assurée par transmission de trames de données modulée sur une porteuse selon un carrousel ou une boucle sans fin.

Un navigateur 9 permet à l'utilisateur du dispositif source 1 de consulter les différents services proposés, par exemple en complément de programmes de télévision, et d'accéder à ces services.

Ce navigateur 9 est avantageusement connecté à un module de gestion de droits 10. Ainsi, l'utilisateur du dispositif source 1 est informé des possibilités ou non de partager tel ou tel service.

Un premier module de sélection 11 permet à l'utilisateur de choisir le ou les services qu'il souhaite transmettre au terminal cible 2.

Un second module de sélection 12 permet à l'utilisateur de choisir le terminal cible 2, ainsi que le protocole de transmission, par exemple bluetooth, wifi, GPRS, UMTS. En fonction du protocole choisi, l'utilisateur devra, le cas échéant, fournir un identifiant tel que par exemple un numéro de téléphone.

Un module d'émission 13 effectue l'envoi des fragments d'ESG correspondant au(x) service(s) choisi(s), vers le terminal cible choisi.

Avantageusement, le dispositif source 1 comprend un module 14 d'adaptation des services. Ce module 14 permet l'adaptation du service choisi aux capacités du terminal cible, par exemple en termes de résolution d'écran.

La mise à jour du guide des services électroniques du terminal cible 2 est assurée par un module 15.

La mise en oeuvre de l'invention offre de nombreux avantages.

Un utilisateur de terminal mobile pourra poursuivre l'utilisation d'un service en rentrant chez lui, simplement en utilisant son téléviseur en tant que terminal cible.

Tous les membres d'une communauté peuvent bénéficier d'un service dont l'un des membres souhaite partager l'expérience avec les autres membres de la communauté (par exemple espace d'échanges, forum, télévision interactive telle qu'AmigoTV ou myOwnTV, univers virtuel tel que Second Life).

## Revendications

1. Procédé de partage d'au moins un service, notamment un service de télévision interactive, entre un dispositif source (1) et un terminal de communication cible (2) munis chacun d'un guide des services électroniques (ESG), ce procédé comprenant les étapes suivantes :
- réception, au dispositif source (1) :
■ de données génériques de l'ESG en provenance d'un réseau de diffusion numérique (4);
■ de données spécifiques au profil de l'utilisateur du dispositif source (1) en provenance d'une connexion réseau point à point (6);
- mise à jour de l'ESG du dispositif source (1) à partir des données génériques et spécifiques ;
- sélection d'un terminal de communication cible (2) muni d'un ESG;
- sélection d'au moins un service à transmettre à ce terminal de communication cible (2) ;
- identification de fragments ou de morceaux de fragments de l'ESG du dispositif source (1), correspondant au service à transmettre au terminal de communication cible (2) ;
- transmission des fragments de l'ESG du dispositif source (1) vers le terminal de communication cible (2), ces fragments ou morceaux de fragments étant au moins en partie personnalisés car issus des données spécifiques au profil de l'utilisateur du dispositif source (1) ;
- mise à jour de l'ESG du terminal de communication cible (2).

2. Procédé selon la revendication 1, **caractérisé en ce qu'**il comprend :
- une étape de sélection de services dont la transmission au terminal cible est souhaitée et
- une étape de filtrage, parmi lesdits services, de ceux ne pouvant être transmis compte tenu de droits d'accès.

3. Terminal source (1) pourvu d'un guide des services électroniques (ESG) et d'un dispositif de partage d'au moins un service, notamment un service personnalisé de télévision interactive, vers un terminal de communication cible (2), ce dispositif de partage comprenant :
- des moyens de réception (3) de données génériques de l'ESG en provenance d'un réseau de diffusion numérique (4);
- des moyens de réception (5) de données spécifiques au profil de l'utilisateur en provenance d'une connexion réseau point à point (6);
- des moyens de mise à jour de l'ESG du dispositif source (1) ;
- des moyens de sélection d'un terminal de communication cible (2);
- des moyens de sélection d'au moins un service à transmettre à ce terminal de communication cible (2);
- des moyens d'identification de fragments ou de morceaux de fragments de l'ESG du dispositif source (1), correspondant au service à transmettre au terminal de communication cible (2) ;
- des moyens de transmission des fragments de l'ESG du dispositif source (1) vers le terminal de communication cible (2), ces fragments étant au moins en partie personnalisés car issus des données spécifiques au profil de l'utilisateur du dispositif source.

4. Terminal source selon la revendication 3, ce terminal étant un terminal de communication mobile.
